(19) **Europäisches Patentamt European Patent Office Office européen des brevets**

(11) **EP 3 365 284 B1**

(12) **EUROPEAN PATENT SPECIFICATION**

(45) Date of publication and mention
of the grant of the patent:
**20.02.2019 Bulletin 2019/08**

(51) Int Cl.:
*C02F 1/469* (2006.01)    *H01G 11/38* (2013.01)

(21) Application number: **16778414.9**

(22) Date of filing: **10.10.2016**

(86) International application number:
**PCT/EP2016/074187**

(87) International publication number:
**WO 2017/067808 (27.04.2017 Gazette 2017/17)**

(54) **ELECTRODE FOR CAPACITIVE DEIONIZATION**

ELEKTRODE ZUR KAPAZITIVEN DEIONISIERUNG

ÉLECTRODE POUR DÉSIONISATION CAPACITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2015 EP 15190628**

(43) Date of publication of application:
**29.08.2018 Bulletin 2018/35**

(73) Proprietors:
• **Unilever NV**
  **3013 AL Rotterdam (NL)**
  Designated Contracting States:
  **AL AT BE BG CH CZ DE DK EE ES FI FR GR HR
  HU IS IT LI LT LU LV MC MK NL NO PL PT RO RS
  SE SI SK SM TR**
• **Unilever PLC**
  **London, Greater London EC4Y 0DY (GB)**
  Designated Contracting States:
  **CY GB IE MT**

(72) Inventors:
• **DANIEL, Jency**
  **Bangalore 560 066 (IN)**
• **GHOSH, Somnath**
  **Bangalore 560 066 (IN)**
• **RAJANARAYANA, Venkataraghavan**
  **Bangalore 560 066 (IN)**

(74) Representative: **Reijns, Tiemen Geert Pieter
Unilever Patent Group
Olivier van Noortstraat 120
3133 AT Vlaardingen (NL)**

(56) References cited:
**EP-A1- 1 142 831**      **WO-A1-2014/090508**
**WO-A1-2015/080464**    **US-A1- 2015 225 266**

Remarks:
The file contains technical information submitted after the application was filed and not included in this specification

**Description**

**FIELD OF THE INVENTION**

The invention relates to an electrode for capacitive deionisation, It particularly relates to an electrode and a method of preparing the electrode which has increasing tolerance to hardness in feed water.

**BACKGROUND OF THE INVENTION**

Several technologies are available for the purification of water. The list includes ultra-violet (UV) radiation, chemical purification agents like hypochlorite salts as well as the use of various membranes. The listed technologies do not provide deionisation. However other methods such as distillation, reverse-osmosis, capacitive deionisation and ion-exchange resins do provide deionisation.

Deionisation becomes necessary if water contains a lot of dissolved solids, often measured as the TDS (Total Dissolved Solids) of water. During a typical process of capacitive deionisation, water flows through one or more pairs of oppositely charged electrodes during which ions which are present in water get attracted and adsorbed to the surface of electrodes. This phenomenon results in a drop in the TDS. Adsorption is a surface phenomenon which is limited by the available surface area of the electrodes. Commercial water purifiers containing capacitive deionisation electrodes usually contain an arrangement of a number of electrodes which are cyclically charged and discharged. The water flowing through this stack of electrodes gets continuously deionised during charging cycle.

Performance of any CDI system is gauged by two parameters. The first is the degree of reduction in the TDS brought about by the system and the second is called recovery which is defined as the ratio of purified water to the total intake of water.

A preferred electrode is that which continues to offer pure water for as long a time as possible, with higher recovery and which is consistent at providing more TDS removal.

However, the performance of any electrode generally drops over a period of use and at a certain point in its life, the device is no longer capable of providing the desired degree of reduction in the TDS. This is believed to be due to deposition of salts on to the electrodes. This phenomenon affects usable life of the electrodes. However, consumers want longer lasting electrodes.

Antiscalants inhibit deposition or precipitation of salts on the surface of the electrode which over a period results in scale formation. A scale inhibitor is a compound or mixture of compounds which inhibits crystal growth and thereby reduces the tendency of scale to form. Scale inhibitors includes carboxylated polymers, phosphorus-containing materials such as organophosphates, organophosphonates and polyphosphonates. Typical scale inhibitors include sulphonated ethoxylated hydrocarbons, polyacrylates, amine phosphonates and organic polyphosphonic acids.

Although it is known to add antiscalants during desalination by reverse osmosis, such antiscalants are added to the input water for inhibiting precipitation of salts on the surface of membrane. A typical limitation is that this method required additional equipment to introduce the chemical into the water, also the process add undesirable chemicals to the water. Commonly known antiscalants agents like polyacrylic acid are water soluble polymers and cannot be stably included in the electrode.

EP2487278 A2 (2012, Sion Tech Co Ltd) discloses an electrode for preventing fouling phenomenon by increasing the smoothness of a surface of the electrode. The electrode includes an ion-exchangeable ionic resin and an electrode active material and has a coating on a surface, said coating contains an ionic resin having an ion-exchange group. The ionic resin is one selected from polystyrene, polysulfone, polyether sulfone, polyamide, polyester, polyimide, polyether, polyethylene, polytetrafluoroethylene, and poly-glycidyl methacrylate or a mixture of two or more thereof, but is not limited thereto.

EP0438744 A1 (1991, Basf AG) discloses a copolymer for treating scaling in water systems. The copolymer is a water soluble polymer of 50 to 99wt% of monoethylenically unsaturated carboxylic acid and N-vinylformamide. The copolymer are water soluble and therefore will not be suitable as an antiscaling agent for an electrode for capacitive deionization.

US2015/0225266 A1 (Cho et al.) discloses a composition for an electrode binder of a capacitive deionization apparatus for improving ion removal efficiency, which binder has a hydrophilic polymer and a bifunctional cross-linking agent having a hydroxyl group or a carboxyl group at both terminal ends, and the bifunctional cross-linking agent being crosslinkable with the at least one hydrophilic polymer.

An object of the present invention is to provide an electrode for capacitive deionization which inhibits deposition of salt on the surface of the electrode.

A further object of the present invention is to provide an electrode for capacitive deionization which provides increasing tolerance to hardness in feed water.

A still further object of the invention is to provide an electrode for capacitive deionization which gives enhanced recovery as well as higher TDS removal.

Yet another object of the invention is to provide an electrode for capacitive deionization which has enhanced life.

## SUMMARY OF THE INVENTION

We have found that one or more of these objects can be achieved by the electrode of the present invention. In particular, it has been surprisingly found that an electrode having selected polycarboxylic acid cross-linked with selected polyol provides increasing tolerance to hardness in feed water and a capacitive deionisation cell having the disclosed electrode provides for enhanced recovery as well as higher TDS removal. It was also found that the electrode of the present invention has an increased lifetime.

According to a first aspect disclosed is an electroactive coating material for a capacitive deionization electrode comprising:

(i) an adsorbent;
(ii) a conductive carbon black; and,
(iii) a water insoluble polymer;

characterized in that the polymer is a polycarboxylic acid cross-linked with a polyol where the polycarboxylic acid is a copolymer of acrylic acid and maleic

acid and further where the polyol is selected from polyethylene glycol or polyvinyl alcohol and wherein ratio by weight of the amount of adsorbent to the amount of water insoluble polymer to the amount of conductive carbon black is in the range of 5:2:3 to 8:1:1..

According to a second aspect disclosed is an electrode for capacitive deionization cell comprising the electroactive coating material of the first aspect disposed on to a current collector.

According to a third aspect disclosed is process for preparing an electrode of the second aspect having the steps of:

(i) preparing a slurry comprising:

a) 50 to 85 parts by weight of an adsorbent;
b) 5 to 15 parts by weight of a polycarboxylic acid;
c) 5 to 15 parts by weight of a polyol;
d) 2 to 20 parts by weight of a conductive carbon black; and,
e) a fluid in amount not more than four times by dry matter weight of said slurry;

(ii) applying the slurry obtained in step (i) onto a current collector;
(iii) compressing said mould under a pressure of from $2kN/m^2$ to $11kN/m^2$;
(iv) heating said mould to a temperature in the range 120 to 170°C for 30 minutes to 2 hours to form the electroactive coating material; and,
(v) releasing the moulded electrode,

characterized in that the polycarboxylic acid is cross-linked with the polyol to form a water insoluble polymer in-situ and where the polycarboxylic acid is a copolymer of acrylic acid and maleic acid and where the polyol is selected from polyethylene glycol or polyvinyl alcohol and wherein ratio by weight of the amount of adsorbent to the amount of water insoluble polymer to the amount of conductive carbon black is in the range of 5:2:3 to 8:1:1..

According to a further aspect disclosed is a use of a water insoluble polymer having a a copolymer of acrylic acid and maleic acid cross-linked with a polyol selected from polyethylene glycol or polyvinyl alcohol in an electroactive coating material for a capacitive deionization electrode for prolonging the life of the electrode.

## DETAILED DESCRIPTION

It should be understood that throughout the present specification, unless otherwise stated, the prefix "poly" encompasses the prefixes "di", "tri, "oligo", etc. For example, polyols includes diols, triols, oligo-ols, as well as polyols.

As used herein, the term "current collector" refers to a structural part of a capacitive deionization cell whose primary purpose is to conduct electricity between the actual working part of the electrode and the terminals of a capacitive deionization cell. The current collector may be provided in the form of a sheet, a mesh, a plate or a foil. A current collector may, in general, be any one of various materials commonly used in the art, for example, graphite, a copper or aluminum, but is not limited thereto.

By the term "electroactive coating material" it should be understood to mean a coating material comprising an adsorbent, a water insoluble polymer as disclosed herein and a conductive carbon black which coating material is disposed on the current collector. The coating material may be either applied as a coating, or bonded or connected to a current collector. The electroactive coating material is capable of holding and releasing ions from its structure during the charging and discharging cycles of a capacitive deionization cell.

Electroactive coating material

According to a first aspect of the present invention disclosed is an electroactive coating material for a capacitive deionization electrode having an adsorbent, a conductive carbon black and a water insoluble polymer.

Adsorbent:

Disclosed electroactive coating material includes an adsorbent preferably the adsorbent has a specific surface area of 100 to 1300 $m^2$/g more preferably greater than 500 $m^2$/g and still preferably greater than 1000 $m^2$/g.

The preferred adsorbent is selected from activated carbon, high specific surface area graphite (HSAG), carbon nanotube (CNT), activated carbon fiber, a cation exchange resin, zeolite, smectite or vermiculite.

A particularly preferred adsorbent is activated carbon. It is preferred that the activated carbon is obtained from bituminous coal, coconut shell, wood or petroleum tar. Preferably the surface area of activated carbon is greater than 500 $m^2$/g; more preferably greater than 1000 $m^2$/g. It is preferred that the size uniformity co-efficient of the activated carbon is less than 2, more preferably less than 1.5.

It is preferred that the Carbon Tetrachloride number of activated carbon is more than 50 %, more preferably greater than 60%. It is further preferred that iodine number of the activated carbon is more than 800 units, more preferably greater than 1000 units. Further preferably the particle size of the activated carbon is 75 to 300 μm, preferably from 100 to 250 μm.

Modified forms of activated carbon including carbon cloth, carbon felt and carbon aerogel can also be used in place of or in addition to the activated carbon.

Conductive Carbon Black:

Disclosed electroactive coating material includes a conductive carbon black.

The conductive carbon black is a form of elemental carbon. Conductive carbon black is mostly produced by the oil furnace process from liquid aromatic hydrocarbons. In selecting carbon black for electrodes, the preferred and the important factors are total surface area and mesopore surface area, structure and surface oxidation.

The total surface area of the conductive carbon black is preferably greater than 500 $m^2$/g. Further, it is preferred that mesopore area of the conductive carbon black is greater than 100 $m^2$/g, more preferably in the range of 100 $m^2$/g to 1000 $m^2$/g.

Structure of conductive carbon black is characterized by its Oil Absorption Number (OAN). It is preferred that OAN of conductive carbon black is 45 to 400 $cm^3$/100 grams, more preferably 100 to 400 $cm^3$/100 g, further more preferably 250 to 400 $cm^3$/100 g. It is preferred that the conductive carbon black has lower amount of chemisorbed oxygen on its surface thereof.

Suitable grades of conductive carbon black may be selected from TIMCAL Graphite 5 Carbon (Grades: Ensaco™ 250G, Ensaco™ 350) or from Cabot Corporation (Grades: Regal™, Black Pearl™ 2000, Vulcan), or from Evonovik (Grade: PRINTEX™ XE-2), or from Akzo Nobel (Ketjen Black).

Water insoluble polymer:

Disclosed electroactive coating material includes a water insoluble polymer having a polycarboxylic acid cross-linked with a polyol, by ester links.

Preferably the water insoluble polymer is in the form of a network in which the adsorbent and the conductive carbon black is immobilized. Preferably the water insoluble polymer forms a network which is homogeneously spread throughout the electrode and holds the adsorbent and the conductive carbon black together and also enables the electroactive coating material to be bound to the current collector.

The water insoluble polymer is preferably insoluble in polar solvent. The disclosed polymer is insoluble in water, however the polar heads which preferably includes ester groups imparts the polymer hydrophilic nature.

It is highly preferred that the cross-links between the polycarboxylic acid and the polyol is formed in-situ during the process of preparing the electroactive coating material.

Polycarboxylic acid:

The water insoluble polymer of the disclosed electroactive coating material includes a polycarboxylic acid which is a copolymer of acrylic acid and maleic acid.

Preferably weight average molecular weight ($M_w$) of the polycarboxylic acid is in the range from 1000 to 2 x $10^5$ g/mol. Preferably weight average molecular weight of the polycarboxylic acid is not more than 1.5 x $10^5$ g/mol more preferably not more than 1 x $10^5$ g/mol still more preferably not more than 5 x $10^4$ g/mol and further preferably not more than 2.5 x $10^4$ g/mol and most preferably not more than 2 x $10^4$ g/mol but preferably the weight average molecular weight of the polycarboxylic acid is not less than 1 x $10^4$ g/mol more preferably not less than 8 x $10^3$ g/mol still more preferably not less than 5 x $10^3$ g/mol and most preferably not less than 3 x $10^3$ g/mol.

It is found that when the weight average molecular weight of the polycarboxylic acid is higher than 2 x $10^5$ g/mol the resulting electrode swells when exposed to water and the electrode disintegrates rapidly, on the other hand when the weight average molecular weight of the polycarboxylic acid is lower than 1000 g/mol the electrode requires high curing time.

It is surprisingly found that the water insoluble polymer of the present invention also provides for binding the electrode together, it was found that when the weight average molecular Weight of the polycarboxylic acid is lower than 1000 g/mol it typically does not exhibit enough binding property.

Polyol:

The water insoluble polymer of the disclosed electroactive coating material includes a polyol selected from polyethylene glycol or polyvinyl alcohol, it is highly preferred that the polyol is a polyvinyl alcohol.

Preferably weight average molecular weight ($M_w$) of the polyol is in the range from 8 x $10^4$ to 5 x $10^5$ g/mol. Preferably weight average molecular weight of the polyol is not more than 4.5 x $10^5$ g/mol, more preferably not more than 4 x $10^5$ g/mol, still more preferably not more than 3.5 x $10^5$ g/mol and further preferably not more than 3 x $10^5$ g/mol and most preferably not more than 2.5 x $10^5$ g/mol but preferably the weight average molecular weight of the polycarboxylic acid is not less than 2 x $10^5$ g/mol, more preferably not less than 1.5 x $10^5$ g/mol, and most preferably not less than 1.0 x $10^5$ g/mol.

In the disclosed electroactive coating material the ratio by weight of the amount of adsorbent: the amount of water insoluble polymer: the amount of conductive carbon black is in the range of 5:2:3 to 8.5:1:0.5, more preferably in a ratio of 8:1:1.

Preferably the ratio by weight average molecular weight of the amount of polycarboxylic acid to the amount of polyol is from 1:15 to 1:5000, more preferably from 1:15 to 1:50, most preferably from 1:19 to 1:33.

Further alternatively, the water insoluble polymer in accordance with this invention is a copolymer of acrylic acid and maleic acid cross-linked with polyethylene glycol. Yet further alternatively, the water insoluble polymer in accordance with this invention

is a copolymer of acrylic acid and maleic acid cross-linked with polyvinyl alcohol. It is highly preferred that the water insoluble polymer in accordance with this invention is a copolymer of polyacrylic acid and maleic acid cross-linked with polyvinyl alcohol, by ester links.

Further ingredients

Binder:

Disclosed electrode may optionally include a binder. Preferably the binder is thermoplastic. The term thermoplastic binder means a binder having melt flow rate (MFR) less than 5 g/ 10 minutes, more preferably less than 2 g/ 10 minutes, further more preferably less than 1 g/ 10 minutes. Bulk density of the binder is preferably less than or equal to 0.6 g/cm$^3$, more preferably less than or equal to 0.5 g/cm$^3$, and further more preferably less than or equal to 0.25 g/cm$^3$.

Suitable examples include ultra-high molecular weight polymer preferably polyethylene, polypropylene and combinations thereof, which have these low MFR values. The molecular weight is preferably in the range of $10^6$ to $10^9$ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

It is preferred that the thermoplastic binder is not a fibrillated polymer e.g. polytetrafluoroethylene (PTFE).

It is preferred that the particle size of the thermoplastic binder is in the range of 20 to 60 $\mu$m, preferably 40 to 60 $\mu$m. Preferred electrodes contain 8 to 30wt%, more preferably in 10 to 30 wt%, further more preferably 12 to 28 wt% by weight binder.

Electrode

According to a second aspect disclosed is an electrode having the electroactive coating material of the first aspect disposed on a current collector.

Current collector:

Disclosed electrode includes a current collector. The current collector may be any commonly known type of current collector. The material of which the current collector is made, is a conducting material. The current collector is typically made of either a metallic or a non-metallic substance. In general, metal current collector are not usually preferred as the metal has a tendency towards reacting with the water in use, which is not desirable. Although less preferred metallic current collectors are typically non-precious metals and includes but not limited to copper, aluminum, nickel, stainless steel or titanium. It is preferred that the current collector is selected from copper, aluminum and titanium.

Non-metallic current collector is particularly preferred current collector, suitable examples include but not limited to carbon such as graphite or carbon mixtures with a high graphite content.

The current collectors may be in the form of plates, sheets or foils, but mostly they are in the form of sheets.

It is highly preferred that the current collector in the disclosed electrode is a graphite current collector in the form of a sheet.

Further details of the electrode

In order to use the electrodes they are usually cut to required size. This size depends on the size of the corresponding capacitive deionisation cell in which the electrodes are assembled. Usually the electrodes are assembled in the order of pairs, such as 11 pairs, 13 pairs and preferably up to 25 pairs. Beyond 25 pairs, the hydraulic resistance of the arrangement of electrodes becomes too high which causes more pressure drop. Second reason is there is often some lag between the charging cycle and the exit of purified water from the system because the path length defined by the arrangement of electrodes is too high. In a preferred method, water is passed through 8 to 25 pairs of electrodes. It is normally the case that of the total number of electrodes, a sizeable number is double sided electrodes and most often when "n" pairs of electrodes are used; the number of double sided pairs is "n-1" leaving the balance one pair to be used as single sided electrodes, which, in an assembly or stack, are placed one each as the terminal electrodes.

It is particularly preferred that of all the pairs of electrodes, a major portion of the electrodes are double-sided and correspondingly a minor portion of the electrodes are single-sided.

While it is preferred to have parallel arrangement of electrodes, they could also be arranged in series.

It is preferred that thickness of each double-sided electrode is 1 to 6 mm preferably 2 to 5 mm and more preferably 3 to 4 mm. It is preferred that thickness of each single-sided electrode is 1 to 3 mm.

A non-conducting material, such as nylon cloth is preferably used to prevent direct contact between the electrodes. It is particularly preferred that the gap between two adjacent electrodes is upto 1 mm.

Further detailed account of electrodes can be found in WO2009/077276 A1 (Unilever).

Description of a capacitive deionisation cell

In order to use the electrodes, they need to be assembled to form a cell called as a capacitive deionisation cell. The method to form a cell is briefly described.

Usually in such a cell a pair of electrodes is connected to respective positive and negative potential. An enclosure surrounds the capacitive deionisation cell which has provision for the water to flow in and out of the cell. The enclosure also provides for making connections externally to the electrodes in the cell.

Any known means may be used for the input of water into the cell. Water is generally fed through a reservoir or by an inline source of water and a pump. For example, the water stored in the reservoir is fed into the capacitive deionisation cell or the capacitive deionisation cell is connected to a direct source of water such as a tap.

Where pumps are used, water can be pumped under flow rate of 1 to 1500 ml/minute, more preferably 10 to 300 ml/min. More common flow rate is about 55 ml/minute to 200 ml/minute. It is preferred that the water is pre-filtered to render it free of organic materials and particulate impurities. Suitable filtration means can be adopted.

Power Supply

A power supply is necessary. Power can be supplied by any means. However it is preferred that power is supplied by a programmable DC system for supplying DC voltage and for applying pre-programmed timed steps like short-circuiting, charging and discharging.

It is preferred that the voltage applied across the electrodes during the charging step is 0.1 to 10 V, more preferably from 0.8 to 8 V and still more preferably from 1.0 to 6 V. In the discharging step, when the charges on the electrodes are reversed albeit only for a brief period, the preferred applied voltage is -0.1 to -10 V more preferably from -0.8 to - 8 V and still more preferably from -1.0 to -6 V.

Measuring the TDS

A conductivity meter is used to measure the concentration of salts in water and with suitable electronic programs; the TDS is directly calculated and displayed. Preferably two such meters are used. A first conductivity meter located before the capacitive deionisation cell measures the concentration of the salts in the input water. A second conductivity meter located after the cell measures concentration of the salts in output water. This second conductivity meter is connected to an electronic processor. The electronic processor receives electrical signal from the conductivity meter and it converts the electrical signal from the conductivity meter into TDS. It is preferred that conductivity is measured at regular intervals of e.g. one second, which can be controlled by the electronic processor.

In order to provide some means for controlling the output of water, a solenoid valve is generally used in such capacitive deionisation cells.

A solenoid valve is an electromechanically operated valve. The valve is controlled by an electric current through a solenoid. In the case of a two-port valve, the flow is switched on or off and in the case of a three-port valve; the outflow is switched between the two outlet ports. Solenoid valves are the most commonly used control elements in fluid flow.

It is preferred that a 3-way solenoid valve is used of which one port is for input of water and other two are for output. It is preferred that the solenoid valve is connected to the conductivity meter having a relay switch. When TDS is more than the preset limit, the flow-through of water is normally closed and the water comes from an output port. When the TDS is lowered below the pre-set point, the relay switch is turned on and the current flows to the solenoid valve which then switches the flow path to another port.

The electronic processor controls the opening of the specific port of the solenoid valve based on the measured input and output TDS levels and the pre-determined pre-set points for TDS. It is preferred that the TDS of input water is 700 to 800 ppm but the TDS could vary depending on the source of water. It is preferred that the TDS is lowered to at least 30 % of its initial level after deionisation, e.g. reduction from an initial input level of 100 ppm to at least 30 ppm in the output water.

If the electrodes fail to provide lowering by 30 %, then the electrodes may need an intervention. In other words, if the input TDS is 100 ppm and the output TDS is above 70 ppm, the electrodes may need an intervention.

It is preferred that the pre-set upper limit of TDS (i.e. maximum allowable TDS) is 550 ppm, more preferably 300 ppm. A drastic reduction in TDS so as to completely remove all the dissolved salts is not desirable. Water devoid of any dissolved solids usually tastes insipid.

Therefore, the $TDS_{set}$ is minimum 150 ppm. This means that it is preferable to have to minimum of 150 ppm TDS in the output water.

The electrode in use

In use, a capacitive device having two or more electrodes is arranged in series. Each electrode has a first face, an opposing second face and thickness defined by an outer surface extending from the first face to the opposing second face. A first current collector is in electrical contact with the outer surfaces of one or more of the electrodes and insulated from one or more other electrodes through contact with a compliant material disposed between the first current collector and the outer surfaces of one or more other electrodes. A second current collector is in electrical contact with one or more of the electrodes insulated from the first current collector.

A typical method of purification of water has repeating series of cycles during which input water is passed through at least one pair of oppositely charged electrodes, each cycle has:

(i) a charging step;
(ii) a first short-circuiting step;
(iii) a discharging step consisting of reversal of the charges on the electrodes; and
(iv) a second short-circuiting step.

Reversal of applied polarity before ten cycles makes the process inefficient. This is because after change in polarity the system takes a few cycles (termed as waste cycles) to stabilize and perform to its maximum efficiency. Therefore if the polarity is reversed frequently, the number of waste cycles increases which would render the process inefficient. Reversal of charges after twenty cycles would not produce the desired effect as the electrodes would by then have adsorbed more ions.

In the charging step, ions which are present in input water get adsorbed to the surface of the electrodes. In a preferred method, duration of the charging step is for 1 to 25 minutes, more preferably 6 to 18 minutes, further more preferably 12 to 18 minutes. This duration for each step depends on the type of electrodes, the material of their construction, their dimensions, the applied voltage and the TDS of water which is to be treated.

The first short-circuiting step helps to equalize or neutralize the charges adhering to the electrodes so that the ions can pass into the bulk of the water. In a preferred method, duration of the first short-circuiting step is 2 to 60 seconds, more preferably 8 to 15 seconds and most preferably 10 to 15 seconds.

Even after the first short-circuiting step, some ions may still adhere to the electrodes, among other reasons, due to the non specific driving force for desorption. This is achieved by the discharging step which consists of reversal of the applied charge on the electrodes for a brief period which helps release ions adsorbed by the residual charge of the electrodes. Such ions are then readily released by the repulsive electric forces.

This step also regenerates the electrodes for further use. In a preferred method, the duration of the discharging step is 5 to 20 seconds, more preferably 8 to 15 seconds.

The second short-circuiting step helps further neutralize residual charges. In a preferred method duration of the second short-circuiting step is for 4 to 20 minutes, more preferably for 12 to 18 minutes. This step further drives the ions away from the electrodes to the bulk of the water.

Process for preparing the electrode

According to a third aspect disclosed is a process for preparing the electrode of the second aspect comprising a first step of preparing a slurry having (a) 50 to 85 parts by weight of an adsorbent;(b) 5 to 15 parts by weight of a polycarboxylic acid;(c) 5 to 15 parts by weight of a polyol;(d) 2 to 20 parts by weight of a conductive carbon black; and, (e) a fluid in amount not more than four times the weight of dry matter of said slurry. In a preferred process, the fluid is water.

The next step involves applying the obtained slurry onto a current collector. The slurry may be applied onto the current collector by any of the known methods in the art. It may be applied by blade-coating, dip-coating, spray-coating, spin coating, or by gravure roll coating, extrusion coating or by lamination or screen coating, but is not limited thereto.

The further step, involves placing the current collector in a mould and compressing the mould under a pressure of from $2kN/m^2$ to $11kN/m^2$ more preferably $2kN/m^2$ to $5.5kN/m^2$. The current collector is placed inside a metallic mould which preferably includes a telfon sheet placed in contact with either surface of the current collector. The telfon sheets prevents the electrode from sticking to the mould and aids in easy removal of the current collector from the mould.

After compressing, the next step includes heating the mould in an atmosphere maintained at temperature in the range of 120 to 170°C for a duration between 30 minutes to 2 hours. Preferably when the ratio by weight of the adsorbent: water insoluble polymer: conductive carbon black is 8:1:1 the mould is heated in an atmosphere maintained at a temperature of 130°C for 45 minutes and preferably when the ratio by weight of the adsorbent: water insoluble polymer: conductive carbon black is 5:2:3 the mould is preferably heated in an atmosphere maintained at a temperature of 150°C for 60 minutes. Preferably during the heating process, the polycarboxylic acid is cross-linked with the polyol to form a water insoluble polymer in-situ where the polycarboxylic acid is selected from polyacrylic acid or a copolymer of acrylic acid and maleic acid and where the polyol is selected from polyethylene glycol or polyvinyl alcohol.

After the heating step, the next step includes releasing or demoulding the moulded electrode. The disclosed process results in a more or less homogeneous mix, unlike a layered block or layer moulded electrode.

Disclosed is also a process for preparing electroactive coating material for capacitive deionization electrode having the steps of:

> (i) preparing a slurry comprising:

>> a) 50 to 85 parts by weight of an adsorbent;
>> b) 5 to 15 parts by weight of a polycarboxylic acid;
>> c) 5 to 15 parts by weight of a polyol;
>> d) 2 to 20 parts by weight of a conductive carbon black; and,
>> e) a fluid in amount not more than four times by dry matter weight of said slurry;

> (ii) applying the slurry obtained in step (i) onto a substrate placed in a mould;
> (iii) compressing said mould under a pressure of from 2 $kN/m^2$ to 11 $kN/m^2$;
> (iv) heating said mould to a temperature in the range 120 to 170°C for 30 minutes to 2 hours to provide a substrate coated with electroactive coating material; and,
> (v) detaching the electroactive coating material from the substrate to provide the electroactive coating material.

characterized in that the polycarboxylic acid is cross-linked with the polyol to form a water insoluble polymer in-situ and wherein the polycarboxylic acid is a copolymer of acrylic acid and maleic acid and wherein the polyol is selected from polyethylene glycol or polyvinyl alcohol and wherein ratio by weight of the amount of adsorbent to the amount of water insoluble polymer to the amount of conductive carbon black is in the range of 5:2:3 to 8:1:1.

Disclosed is also a process for preparing electroactive coating material for capacitive deionization electrode having the steps of preparing a slurry having (a) 50 to 85 parts by weight of an adsorbent; (b) 5 to 15 parts by weight of a polycarboxylic acid;(c) 5 to 15 parts by weight of a polyol; (d) 2 to 20 parts by weight of a conductive carbon black; and (e) a fluid in amount not more than four times by dry matter weight of said slurry. In a preferred process, the fluid is water.

The next step involves applying the obtained slurry onto a substrate. The slurry may be applied onto the substrate by any of the known methods in the art. It may be applied by blade-coating, dip-coating, spray-coating, spin coating, or by gravure roll coating, extrusion coating or by lamination or screen coating, but is not limited thereto.

The further step, involves placing the coated substrate in a mould and compressing the mould under a pressure of from $2kN/m^2$ to $11kN/m^2$ more preferably $2kN/m^2$ to $5.5kN/m^2$. The susbtrate is preferably placed inside a metallic mould which preferably includes a telfon sheet placed in contact with either surface of the substrate. The telfon sheets prevents the susbtrate from sticking to the mould and aids in easy removal of the susbtrate from the mould.

After compressing, the next step includes heating the mould in an atmosphere maintained at temperature in the range of 120 to 170°C for a duration between 30 minutes to 2 hours. Preferably when the ratio by weight of the adsorbent: water insoluble polymer: conductive carbon black is 8:1:1, the mould is heated in an atmosphere maintained at a temperature of 130°C for 45 minutes and preferably when the ratio by weight of the adsorbent: water insoluble polymer: conductive carbon black is 5:2:3 the mould is preferably heated in an atmosphere maintained at a temperature of 150°C for 60 minutes. Preferably during the heating process, the polycarboxylic acid is cross-linked with the polyol to form a water insoluble polymer in-situ where the polycarboxylic acid is a copolymer of acrylic acid and maleic acid and where the polyol is selected from polyethylene glycol or polyvinyl alcohol to provide a substrate coated with electroactive coating material.

The next step includes detaching the coating from the substrate to obtain the electroactive coating material.

Method for purification of water

During purification, positive and negative potential is applied across the electrodes and the counter-ions which are present in water get attracted to the electrodes of corresponding opposite charge. This effect leads to lowering in the ions which are present in the input water.

In the regeneration step, the charge on the electrodes is reversed (or the electrodes are short-circuited). In this step, ions get desorbed from the electrodes and pass into the flowing water due to electrostatic repulsion. During this step, a greater amount of ions is present in the water. Such water is generally not fit for consumption therefore commercial devices have built-in mechanisms to discard this water.

According to a further aspect there is provided a device for desalination of water comprising a housing including a plurality of electrodes having an electroactive coating material comprising 50 to 85 wt% of activated carbon with a particle size range of 75 to 300 $\mu$m, 5 to 15 % by weight of the disclosed water insoluble polymer and 2 to 20 wt% conductive carbon black wherein said electrodes are connected to a source of DC power to provide voltage lower than 1.4 V potential.

According to yet another aspect is provided a capacitive deionization cell having an electrode of the second aspect or prepared by a process according to the third aspect.

According to yet another aspect is provided a gravity-fed water purification device for removal of dissolved salts from water comprising a housing having a plurality of electrodes of the first aspect wherein the electrodes are connected to a source of DC power to provide voltage less than 1.4 V potential across the electrodes.

According to yet another aspect disclosed is an electrode obtainable by a process according to the third aspect.

According to a further aspect disclosed is a use of a water insoluble polymer having a a copolymer of acrylic acid and maleic acid cross-linked with a polyol selected from polyethylene glycol or polyvinyl alcohol in an electroactive coating material for a capacitive deionization electrode for prolonging the life of the electrode. Preferably the water insoluble polymer having a copolymer of acrylic acid and maleic acid cross-linked with a polyol selected from polyethylene glycol or polyvinyl alcohol is synthesized in situ during the process of preparing the electroactive coating material.

The invention will now be explained in greater details with non-limiting examples of preferred compositions.

**EXAMPLES**

Example 1: Process for making an electrode according to the invention

The electrode (Ex 1) according to the present invention was prepared by slurry process followed by a thermal anneal. To prepare the electrode, powdered activated carbon (specific surface area 100 $m^2/g$ to 1300 $m^2/g$; supplied by Active Carbon), copolymer of polyacrylic acid and maleic acid (with weight average molecular weight 1500 to 5000 g/mol; supplied by Sigma Aldrich), polyvinyl alcohol (99000 to 110000 g/mol; supplied by Sigma Aldrich) and conductive carbon black (BET surface area 200-800 $m^2/g$, conductivity ~ 0.05 S/cm; supplied by Timcal) were mixed in the ratio by weight of 8:1:1 along with de-ionized water to form a slurry.

The slurry was spread on a circular graphite sheet of 0.3 mm thickness and 15cm diameter. The graphite sheet was placed inside a mould and compressed under a pressure of 5.5kN/$m^2$. The mould was then kept inside a hot air oven for 45 minutes. The oven was maintained at 130°C.

Comparative electrode (Ex A) was prepared a wet mixing process followed by a thermal anneal. To prepare the electrode (Ex A) powdered activated carbon (specific surface area 100 $m^2/g$ to 1300 $m^2/g$; supplied by Active Carbon), a binder (HDPE; supplied by Tacoma) and conductive carbon black (BET surface area 200-800 $m^2/g$, conductivity ~ 0.05 S/cm; supplied by Timcal) were mixed in the ratio by eight 7:2:1 along with de-ionized water to form wet mix.

The wet mix obtained in the previous step was spread on a circular graphite sheet of 0.3 mm thickness and 15cm in diameter. The graphite sheet was placed inside a mould and compressed under a pressure of 5.5kN/$m^2$. The mould was then kept inside a hot air oven for 150 minutes. The oven was maintained at 250°C.

The composition of the electrode Ex 1 and Ex A are provided in table 1.

Table 1

| Composition | Ex 1 | Ex A |
| --- | --- | --- |
| powdered activated carbon (in grams) | 80 | 70 |
| conductive carbon black (in grams) | 10 | 10 |
| HDPE (in grams) | 0 | 20 |
| Water insoluble polymer of a copolymer polyacrylic acid and maleic acid cross linked with polyvinyl alcohol (in grams) | 10 | 0 |
| Weight per electrode (in grams) | 10 | 6 |
| Curing temperature (°C) | 250 | 130 |
| Curing time (in minutes) | 150 | 45 |

The input water for all the experiments was borewell water containing 815 ppm TDS. The water was substantially free of colloids, organic materials and particulate matter. The flow rate of input water was fixed at 10 mL/minute. The output water was considered to be pure when the TDS was below 550 ppm ($TDS_{set}$).

DC voltage of 1.2 V was applied to the cell. The desalination experiments were performed by cycling the electrodes through a process consisting of applying a potential for 16 minutes (T1), a shorting stage for 10 seconds (T2), a reverse potential step for 10 seconds (T3) and a shorting state for 8 minutes (T4). During T1, a positive voltage was applied to one of the electrodes and negative voltage at the other electrode, and during T3 the polarities of electrodes were reversed. During the shorting state, no voltage was applied across the electrodes and the terminals of the electrode were shorted.

The performance of the electrode material was determined by observing the reduction in TDS and the recovery using the following equations:

$$\text{Salt removal (\%)} = [1-(TDS_{input}/TDS_{output})]*100$$

$$\text{Recovery (\%)} = [\text{Volume of purified water/volume of input water}]*100.$$

In Table 2, the term "water passed before the salt removal drops to 25% (in liters)" is a measure of the life of the electrode. The life of the electrode is determined by the amount of water treated by the electrode before the performance of the electrode falls below a predetermined value of salt removal (%), which for the purpose of this example was set at 25%.

In Table 2, the term "life/grams of electrode material (liters/gram)" is used to express a measure of the life of the electrode as described above and takes into consideration the variation in the amount of electrode material present in Ex A and Ex 1.

$$\text{Life of an electrode} = \frac{\underline{\text{water passed before the salt removal drops to 25\% (in litres)}}}{\text{weight of electrode material (in gm)}}$$

In Table 2, the term "Electrosorption capacity" is a measure of the total salt adsorption capacity of an electrode. A higher value indicates that the electrode adsorbs more salt per gram of the electrode material during the charging cycle in operation as compared to an electrode with lower electrosorption capacity value.

The data is shown in table 2.

Table 2: Single cell data having 2 electrodes

| | Ex A | | | | Ex 1 | | | |
|---|---|---|---|---|---|---|---|---|
| Average salt removal (%) | 37 | | | | 41 | | | |
| Weight of electrodes (in grams) | 20 | | | | 12 | | | |
| water passed before the salt removal drops to 25% (in litres) | 78 | | | | 53 | | | |
| Electrosorption capacity (mg/g) | 4.7 | | | | 6.6 | | | |
| Life/grams of electrode material (litres/gram) | 3.9 | | | | 4.5 | | | |
| Cycle time | T1 | T2 | T3 | T4 | T1 | T2 | T3 | T4 |
| | 16 | 10 | 10 | 480 | 16 | 10 | 10 | 480 |
| Note: In table 1, the time T1 is in minutes and T2 to T4 are in seconds. | | | | | | | | |

The data in Table 2 clearly demonstrates that electrode of Ex 1 (according to the present invention) having the disclosed water insoluble polymer provides improved salt removal as compared to the comparative electrode (Ex A). The electrode according to the present invention (Ex 1) showed an increase in the life of the electrode by approximately 16% as compared to the comparative electrode (Ex A). The electrode according to the present invention also showed a surprising increase in the conductivity of the electrode, which in turn provided improved salt removal kinetics. It can be further seen that the curing time for the electrode of the present invention (Ex 1) is significantly lower than the comparative electrode, which contributes to higher energy efficiency.

It will be appreciated that the illustrated examples provide an electrode having a water insoluble polymer comprising a a copolymer polyacrylic acid and maleic acid cross linked with polyvinyl alcohol which provides improved salt removal and recovery rate and also enhances the life of the electrode.

It should be understood that the specific forms of the invention herein illustrated and described are intended to be representative only, as certain changes may be made therein without departing from the scope of the claims.

Although the invention has been described with reference to specific embodiments, it will be appreciated by those skilled in the art that the invention may be embodied in many other forms.

**Claims**

1. An electroactive coating material for a capacitive deionisation electrode comprising:

   (i) an adsorbent;
   (ii) a conductive carbon black; arid,
   (iii) a water insoluble polymer;

   **characterized in that** the polymer is a polycarboxylic acid ester-linked with a polyol, where the polycarboxylic acid is a copolymer of acrylic acid and maleic acid and the polyol is selected from polyethylene glycol or polyvinyl alcohol wherein ratio by weight of the amount of adsorbent to the amount of water insoluble polymer to the amount of conductive carbon black is in the range of 5:2:3 to 8:1:1.

2. An electroactive coating material as claimed in Claim 1 wherein the water insoluble polymer is in the form of a network.

3. An electroactive coating material as claimed in Claim 2 wherein the adsorbent and the conductive carbon black are immobilised in the network.

**4.** An electroactive coating material as claimed in claim 1 wherein the polycarboxylic acid has a weight average molecular weight of 1000 to $2 \times 10^5$ g/mol.

**5.** An electroactive coating material as claim in claim 1 wherein the polyol has a weight average molecular weight of $8 \times 10^4$ to $5 \times 10^5$ g/mol.

**6.** An electroactive coating material as claimed in claim 1 wherein the adsorbent has a specific surface area of 100 $m^2$/g to 1300 $m^2$/g.

**7.** An electroactive coating material as claimed in any one of the preceding claims comprising a water insoluble polymer wherein the polycarboxylic acid is a copolymer of polyacrylic acid and maleic acid and the polyol is polyvinyl alcohol.

**8.** An electroactive coating material as claimed in any one of the preceding claims wherein the ratio by weight average molecular weight of the amount of polycarboxylic acid to the amount of polyol is 1:15 to 1:5000.

**9.** An electroactive coating material as claimed in any one of the preceding claims wherein said adsorbent is selected from activated carbon, high specific surface area graphite (HSAG), carbon nanotube (CNT), activated carbon fiber, a cation exchange resin, zeolite, smectite or vermiculite.

**10.** An electroactive coating material as claimed in claim 9 wherein said adsorbent is activated carbon.

**11.** An electrode comprising the electrode active material layer as claimed in claims 1 to 10 disposed on to a current collector.

**12.** A process for preparing an electrode for capacitive deionization cell as claimed in claim 11 comprising the steps of:

> (i) preparing a slurry comprising:

>> a) 50 to 85 parts by weight of an adsorbent;
>> b) 5 to 15 parts by weight of a polycarboxylic acid;
>> c) 5 to 15 parts by weight of a polyol;
>> d) 2 to 20 parts by weight of a conductive carbon black; and,
>> e) a fluid in amount not more than four times by dry matter weight of said slurry;

> (ii) applying the slurry obtained in step (i) onto a current collector placed in a mould;
> (iii) compressing said mould under a pressure of from 2 $kN/m^2$ to 11 $kN/m^2$;
> (iv) heating said mould to a temperature in the range 120 to 170°C for 30 minutes to 2 hours to form the electroactive coating material; and,
> (v) demoulding the coated electrode,

> **characterized in that** the polycarboxylic acid is ester-linked with the polyol to form a water insoluble polymer in-situ and wherein the polycarboxylic acid is a copolymer of acrylic acid and maleic acid and wherein the polyol is selected from polyethylene glycol or polyvinyl alcohol and wherein ratio by weight of the amount of adsorbent to the amount of water insoluble polymer to the amount of conductive carbon black is in the range of 5:2:3 to 8:1:1.

**13.** Use of a water insoluble polymer having a copolymer of acrylic acid and maleic acid ester-linked with a polyol selected from polyethylene glycol or polyvinyl alcohol in an electroactive coating material for a capacitive deionization electrode according to anyone of the claims 1 to 1 1 for prolonging the life of the electrode.

**Patentansprüche**

**1.** Elektroaktives Beschichtungsmaterial für eine Elektrode zur kapazitiven Deionisierung, umfassend:

> (i) ein Adsorptionsmittel,
> (ii) einen leitfähigen Ruß und
> (iii) ein wasserunlösliches Polymer,

**dadurch gekennzeichnet, dass** das Polymer eine mit einem Polyol Esterverknüpfte Polycarbonsäure ist, wobei die Polycarbonsäure ein Copolymer von Acrylsäure und Maleinsäure ist und das Polyol aus Polyethylenglykol oder Polyvinylalkohol ausgewählt ist, wobei das Gewichtsverhältnis der Menge des Adsorptionsmittels zu der Menge des wasserunlöslichen Polymers zu der Menge des leitfähigen Rußes in dem Bereich von 5:2:3 bis 8:1:1 liegt.

2. Elektroaktives Beschichtungsmaterial, wie im Anspruch 1 beansprucht, wobei das wasserunlösliche Polymer in Form eines Netzwerks vorliegt.

3. Elektroaktives Beschichtungsmaterial, wie im Anspruch 2 beansprucht, wobei das Adsorptionsmittel und der leitfähige Ruß in dem Netzwerk immobilisiert sind.

4. Elektroaktives Beschichtungsmaterial, wie im Anspruch 1 beansprucht, wobei die Polycarbonsäure ein gewichtsgemitteltes Molekulargewicht von 1000 bis $2 \times 10^5$ g/mol aufweist.

5. Elektroaktives Beschichtungsmaterial, wie im Anspruch 1 beansprucht, wobei das Polyol ein gewichtsgemitteltes Molekulargewicht von $8 \times 10^4$ bis $5 \times 10^5$ g/mol aufweist.

6. Elektroaktives Beschichtungsmaterial, wie im Anspruch 1 beansprucht, wobei das Adsorptionsmittel eine spezifische Oberfläche von 100 m$^2$/g bis 1300 m$^2$/g aufweist.

7. Elektroaktives Beschichtungsmaterial, wie in irgendeinem der vorhergehenden Ansprüche beansprucht, umfassend ein wasserunlösliches Polymer, wobei die Polycarbonsäure ein Copolymer von Polyacrylsäure und Maleinsäure und das Polyol Polyvinylalkohol ist.

8. Elektroaktives Beschichtungsmaterial, wie in irgendeinem der vorhergehenden Ansprüche beansprucht, wobei das Verhältnis, bezogen auf das gewichtsgemittelte Molekulargewicht, der Menge der Polycarbonsäure zu der Menge des Polyols 1:15 bis 1:5000 beträgt.

9. Elektroaktives Beschichtungsmaterial, wie in irgendeinem der vorhergehenden Ansprüche beansprucht, wobei das Adsorptionsmittel aus aktiviertem Kohlenstoff, Graphit mit hoher spezifischer Oberfläche (HSAG), Kohlenstoff-Nanoröhrchen (CNT), aktivierter Kohlenstofffaser, Kationenaustauschharz, Zeolith, Smektit oder Vermiculit ausgewählt ist.

10. Elektroaktives Beschichtungsmaterial, wie im Anspruch 9 beansprucht, wobei das Adsorptionsmittel aktivierter Kohlenstoff ist.

11. Elektrode, umfassend das aktive Elektrodenschichtmaterial, wie in den Ansprüchen 1 bis 10 beansprucht, angeordnet auf einem Stromabnehmer.

12. Verfahren zur Herstellung einer Elektrode für eine kapazitive Deionisierungszelle, wie im Anspruch 11 beansprucht, umfassend die Schritte:

(i) Herstellung einer Aufschlämmung, umfassend:

a) 50 bis 85 Gewichtsteile eines Adsorptionsmittels,
b) 5 bis 15 Gewichtsteile einer Polycarbonsäure,
c) 5 bis 15 Gewichtsteile eines Polyols,
d) 2 bis 20 Gewichtsteile eines leitfähigen Rußes und
e) eine Flüssigkeit in einer Menge von nicht mehr als dem Vierfachen des Trockenmassegewichts der Aufschlämmung,

(ii) Auftragen der in Schritt (i) erhaltenen Aufschlämmung auf einen Stromabnehmer, der in einer Form platziert ist,
(iii) Komprimieren der Form unter einem Druck von 2 kN/m$^2$ bis 11 kN/m$^2$,
(iv) Erhitzen der Form auf eine Temperatur in dem Bereich von 120 bis 170°C für 30 Minuten bis zu 2 Stunden, um das elektroaktive Beschichtungsmaterial zu bilden, und
(v) Entformen der beschichteten Elektrode,

**dadurch gekennzeichnet, dass** die Polycarbonsäure mit dem Polyol Ester-verknüpft ist, um in situ ein wasserunlösliches Polymer zu bilden, und wobei die Polycarbonsäure ein Copolymer von Acrylsäure und Maleinsäure ist und wobei das Polyol aus Polyethylenglykol oder Polyvinylalkohol ausgewählt ist und wobei das Gewichtsverhältnis der Menge des Adsorptionsmittels zu der Menge des wasserunlöslichen Polymers zu der Menge des leitfähigen Rußes in dem Bereich von 5:2:3 bis 8:1:1 liegt.

13. Verwendung eines wasserunlöslichen Polymers, das ein Copolymer von Acrylsäure und Maleinsäure Ester-verknüpft mit einem Polyol, das aus Polyethylenglykol oder Polyvinylalkohol ausgewählt ist, aufweist, in einem elektroaktiven Beschichtungsmaterial für eine Elektrode zur kapazitiven Deionisierung nach irgendeinem der Ansprüche 1 bis 11 zur Verlängerung der Nutzungsdauer der Elektrode.

**Revendications**

1. Matériau de revêtement électroactif pour une électrode de désionisation capacitive comprenant :

   (i) un adsorbant ;
   (ii) un noir de carbone conducteur ; et
   (iii) un polymère insoluble dans l'eau ;

   **caractérisé en ce que** le polymère est un ester d'acide polycarboxylique-lié avec un polyol, où l'acide polycarboxylique est un copolymère d'acide acrylique et d'acide maléique et le polyol est choisi parmi le polyéthylène glycol ou poly(alcool vinylique) dans lequel un rapport en masse de la quantité d'adsorbant à la quantité de polymère insoluble dans l'eau à la quantité de noir de carbone conducteur se trouve dans l'intervalle de 5:2:3 à 8:1:1.

2. Matériau de revêtement électroactif selon la revendication 1 dans lequel le polymère insoluble dans l'eau est dans la forme d'un réseau.

3. Matériau de revêtement électroactif selon la revendication 2 dans lequel l'adsorbant et le noir de carbone conducteur sont immobilisés dans le réseau.

4. Matériau de revêtement électroactif selon la revendication 1 dans lequel l'acide polycarboxylique présente une masse moléculaire moyenne en masse de 1 000 à $2 \times 10^5$ g/mol.

5. Matériau de revêtement électroactif selon la revendication 1 dans lequel le polyol présente une masse moléculaire moyenne en masse de $8 \times 10^4$ à $5 \times 10^5$ g/mol.

6. Matériau de revêtement électroactif selon la revendication 1 dans lequel l'adsorbant présente une surface spécifique de 100 m$^2$/g à 1 300 m$^2$/g.

7. Matériau de revêtement électroactif selon l'une quelconque des revendications précédentes comprenant un polymère insoluble dans l'eau dans lequel l'acide polycarboxylique est un copolymère de poly(acide acrylique) et d'acide maléique et le polyol est du poly(alcool vinylique).

8. Matériau de revêtement électroactif selon l'une quelconque des revendications précédentes dans lequel le rapport en masse moléculaire moyenne en masse de la quantité d'acide polycarboxylique à la quantité de polyol est de 1:15 à 1:5 000.

9. Matériau de revêtement électroactif selon l'une quelconque des revendications précédentes dans lequel ledit adsorbant est choisi parmi du charbon actif, du graphite de surface spécifique élevée (HSAG), un nanotube de carbone (CNT), une fibre de charbon actif, une résine échangeuse de cations, de la zéolite, smectite ou vermiculite.

10. Matériau de revêtement électroactif selon la revendication 9 dans lequel ledit adsorbant est du charbon actif.

11. Electrode comprenant la couche de matériau actif d'électrode selon les revendications 1 à 10 disposée sur un collecteur de courant.

12. Procédé de préparation d'une électrode pour une pile de désionisation capacitive selon la revendication 11 comprenant les étapes de :

(i) préparation d'une suspension comprenant :

a) de 50 à 85 parties en masse d'un adsorbant ;
b) de 5 à 15 parties en masse d'un acide polycarboxylique ;
c) de 5 à 15 parties en masse d'un polyol ;
d) de 2 à 20 parties en masse d'un noir de carbone conducteur ; et,
e) un fluide dans une quantité qui n'est pas supérieure à quatre fois la masse de matière sèche de ladite suspension ;

(ii) application de la suspension obtenue dans l'étape (i) sur un collecteur de courant placé dans un moule ;
(iii) compression dudit moule sous une pression de 2 kN/m$^2$ à 11 kN/m$^2$ ;
(iv) chauffage dudit moule à une température dans l'intervalle de 120 à 170°C pendant de 30 minutes à 2 heures pour former le matériau de revêtement électroactif ; et,
(v) démoulage de l'électrode revêtue,

**caractérisé en ce que** l'acide polycarboxylique est ester-lié avec le polyol pour former un polymère insoluble dans l'eau in-situ et dans lequel l'acide polycarboxylique est un copolymère d'acide acrylique et d'acide maléique et dans lequel le polyol est choisi parmi le polyéthylène glycol ou poly(alcool vinylique) et dans lequel le rapport en masse de la quantité d'adsorbant à la quantité de polymère insoluble dans l'eau à la quantité de noir de carbone conducteur se trouve dans l'intervalle de 5:2:3 à 8:1:1.

13. Utilisation d'un polymère insoluble dans l'eau présentant un copolymère d'ester d'acide acrylique et d'acide maléique-lié avec un polyol choisi parmi le polyéthylène glycol ou poly(alcool vinylique) dans un matériau de revêtement électroactif pour une électrode de désionisation capacitive selon l'une quelconque des revendications 1 à 11 pour prolonger la durée de vie de l'électrode.

**EP 3 365 284 B1**

**REFERENCES CITED IN THE DESCRIPTION**

**Patent documents cited in the description**

- EP 2487278 A2
- EP 0438744 A1
- US 20150225266 A1, Cho
- WO 2009077276 A1